# EUROPEAN PATENT SPECIFICATION

(11) **EP 1 715 968 B1**
(45) Date of publication and mention of the grant of the patent: **11.05.2011**
(21) Application number: 05706997.3
(22) Date of filing: 25.01.2005
(51) Int. Cl.: B21D 5/02, G01B 13/18

(54) **PROCESS FOR DETECTING THE BENDING ANGLE OF A PLATE SHEET IN A BENDING PRESS**
VERFAHREN ZUR ERFASSUNG DES BIEGEWINKELS EINER BLECHPLATTE IN EINER BIEGEPRESSE
PROCEDE PERMETTANT DE DETECTER L'ANGLE DE CINTRAGE D'UNE PLAQUE DANS UNE PRESSE A CINTRER

(30) Priority: 18.02.2004 IT PR20040010
(43) Date of publication of application: 02.11.2006
(73) Proprietor: Schiavi Macchine Industriali Lavorazione Lamiera S.R.L., 29121 Piacenza (IT)
(72) Inventor: CELLA, Giovanni, I-29010 Rottofreno (IT)
(74) Representative: Guareschi, Antonella
(86) International application number: PCT/EP2005/000690
(87) International publication number: WO 2005/077559

(56) References cited:
- US-A- 5 099 666
- US-B1- 6 553 803

## Description

The present invention deals with a process and a pneumatic device for detecting the bending angle of a plate sheet in a bending press.

As known, bending presses can have different construction variations. The most widespread ones are composed of a moving table supporting a punch and a fixed table supporting a matrix die.

The moving table can translate in a vertical plane along two risers on which two hydraulic cylinders are assembled for this movements.

Matrix die and punch have different shapes depending on the bending angle that has to be obtained, and therefore are both or only one of them interchangeable, provided that they are compatible.

The plate sheet is rested onto the matrix die and the punch drops over it.

One of the major problems of bending presses is verifying, at the end of the bending step, the bending angle and in particular whether such angle coincides with the desired angle.

In fact, it is known that the plate dose not keep the angle imprinted by punch and matrix die due to the elastic return of the plate itself.

The elastic plate return can be determined with difficulty, since it depends on three major variable factors:
- plate thickness, which is not constant in all plate sheet points;
- material of which the plate is composed;
- lamination direction of the plate sheet.
- Such factors can change for the same sheets and for the same workings, so that it is necessary, for every bend plate sheet, to verify whether the bending angle coincides with the desired angle and possibly intervene with a new pressing action.

Several systems, of the mechanical and of the optical type, are already known for detecting the bending angle, and the most accurate ones provide for carrying out the measure on four points.

The mechanical system disclosed, for example, in U.S. Pat. No. 4,131,008, IT-A-1293374, IT-A-1294147, provide for feeler means to detect the bending angle on the plate intrados or extrados, composed of one or two elastically yielding and independent forks.

In case of two forks, they can be placed one inside the other or side by side.

The fork heads or bits are adapted to be arranged in contact with the sheet plate.

The two elastically yielding forks are connected on their lower side to a related position transducer that communicates with a logical data processing unit that manages the bending press.

Another system of the mechanical type is disclosed in DE-A-10006512 in which, for detecting the bending angle, two levers are used with their fulcrum onto the matrix die and which, through their rotation movement, operate on a signal transducer.

Another system for detecting the bending angle is the one manufactured by the Belgian Company LVD that provides for a moving arm, placed beside the matrix die, which, supported by two linkages, and during the bending stage, arranges sensor means in contact with one of the two wings of the diverging plate.

The sensor means are coaxially moving with respect to such arm and provide detection data to the bending press logical unit.

These mechanical system have the inconvenience that they cannot be applied to all types of matrix dies, in particular matrix dies with narrow slots, since physically there is no room for inserting the forks.

Moreover, the fork movement can be constrained by the presence of dirt or metallic debris that can always be found in environments where metals are worked.

The optical system, see WO-A-01/28706, provides for at least one source of a light beam that is used for projecting two spots or a linear segment onto part of the sheet to be controlled.

The bending angle is given by the distance between the projected spots, the known beam incidence angles, and the known distance between detection planes.

The passing channels of the two light beams create a punch weakening; moreover, such channels can be easily occluded by debris or impurities that can be found on the plates thereby impairing their reading or making it unreliable.

It also known from patent EP 1083403 a method and device for detecting the bending angle of a plate. EP 1083403 shows a bending die having orifices in the face and slot side. In order to detect the bending angle, the pressure difference in an orifice is measured. With the help of tables, formulas, etc the value of the pressure difference is transferred in a value of an angle.

It is also known from patent US6553803 a method and an apparatus for determining the bending angle of a work piece to be bent by means of a bending apparatus comprising a punch member and a die member cooperating with the punch member. The die member is provided with at least two channels through which pressurized air is blown towards a leg of the bent work piece. For measuring the pressure in each of the channels, a plurality of pressure sending devices is provided and connected to a common control and analyzing assembly. On the basis of the pressure values measured by the pressure sensing devices and with the aid of formulae, tables, three dimensional diagrams or with the aid of a neuronal network, the control and analyzing assembly calculates the bending angle.

The aforesaid patent uses pressure sensors of the absolute type, namely pressure detectors each located on a channel line so as to measure the pressure on each respective line; it does not comply measuring a pressure variation between measured pressure values of at least two flows of compressed air.

Object of the present invention is ensuring the bending angle determination with a system that is able to avoid any occlusion or reading obstacle.

These and other objects are all obtained by the process and the device of the present invention, that is characterised by what is provided in the enclosed claims.

These and other characteristics will be better pointed out by the following description of some embodiments shown, merely as a non-limiting example, in the enclosed tables of drawing, in which:
- FIG. 1 schematically shows the present device applied to a matrix die of a bending press before starting the bending step;
- FIG. 2 shows the device in FIG. 1 in an intermediate bending step;
- FIG. 3 shows the device in FIG. 1 in a final bending step;
- FIG. 4 shows, in a block diagram form, a preferred embodiment of the measuring system with auxiliary devices that increase its accuracy.

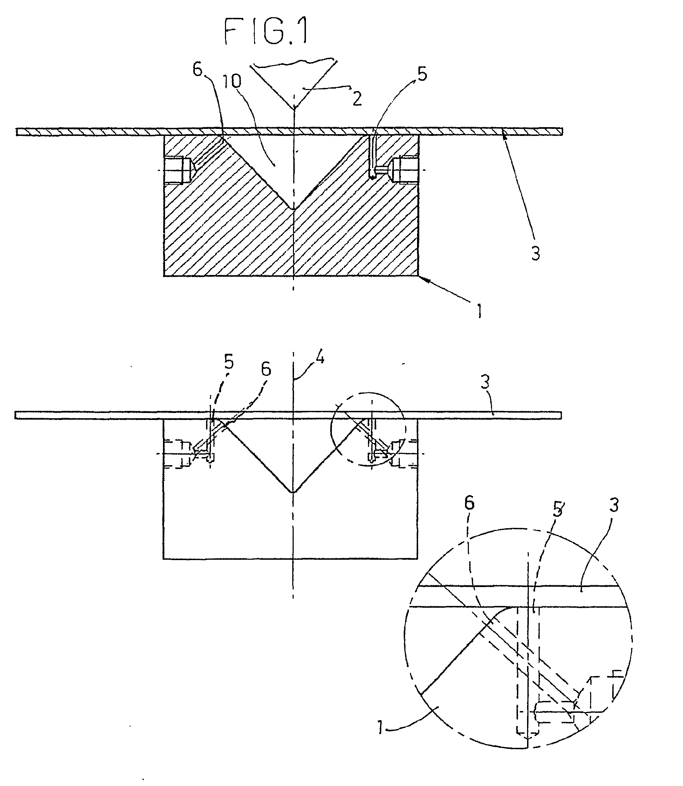

With reference to FIG. 1, reference 1 designates a matrix of a bending press in a cross section, and reference 10 designates the matrix die slot.

The punch 2 is provided over the matrix die, while reference 3 designates a plate sheet that has to be bent along a desired line and that must reach a certain bending angle.

Two pairs of orifices, symmetrically arranged with respect to the vertical pressing axis 4 , can be noted in this matrix die section.

Each pair comprises a first orifice 5 and a second orifice 6 , which are supplied through respective channels 7 and 8 obtained in the matrix die body, through a compressed air system.

The compressed air system, whose line 9 is shown, provides for a precision pressure reducer RP that always keeps the pressure constant at a pre-set value, with a symmetrical and balanced piping system, adapted to sent the same air flow rate to the four orifices when they are completely open.

In the most general case, on each line a pressure detector is inserted, which transmits its own signal to a signal transducer which is able to communicate with a data processing unit that is able to process the position assumed by the plate, and therefore the plate bending angle, every time during its bending and particularly till the punch ceases its action and goes away from the matrix die, while the plate elastically returns to its final bending angle.

The orifices location is preferably the shown one and more precisely the first orifice 5 , called external orifice, is vertically arranged along a perpendicular direction to the plate sheet before its bending and is substantially on the plane matrix die surface next to the slot.

The second orifice 6 , called internal orifice, is arranged perpendicularly to the slot face and exits onto this face at a certain distance from the first orifice.

The two orifices therefore are on two surfaces that get in contact with the plate at different times when the plate is bent with its maximum possible angle.

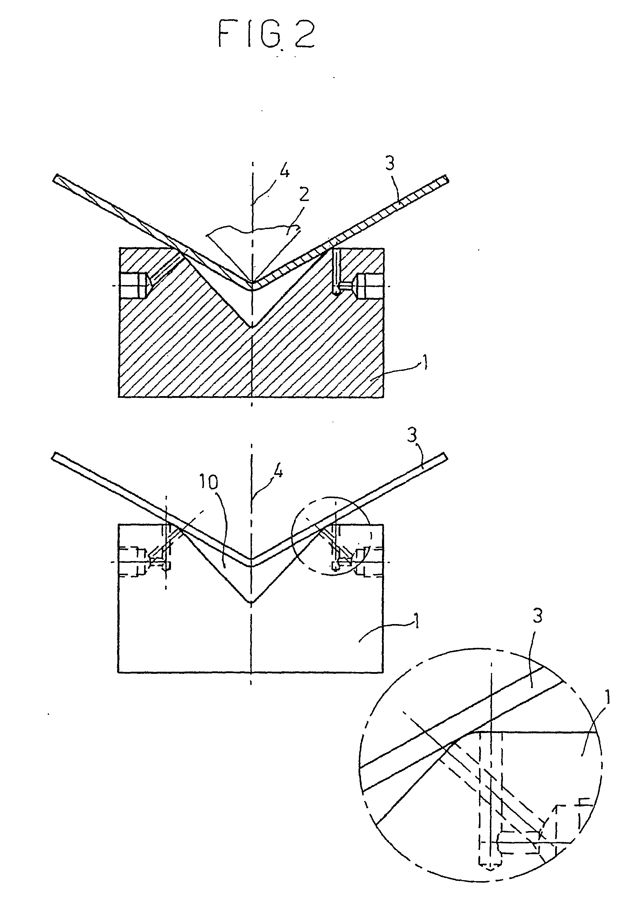

As shown in FIG. 1, the plate sheet, at the beginning of the pressing cycle, completely clogs the orifice 5 and the detected pressure will be maximum, while the orifice 6 will be completely free with a minimum pressure, since air will be able to freely go out to the outside environment. When starting the pressing step, see FIG. 2, the orifice 5 will start to be freed while the orifice 6 will start to close due to the plate bending.

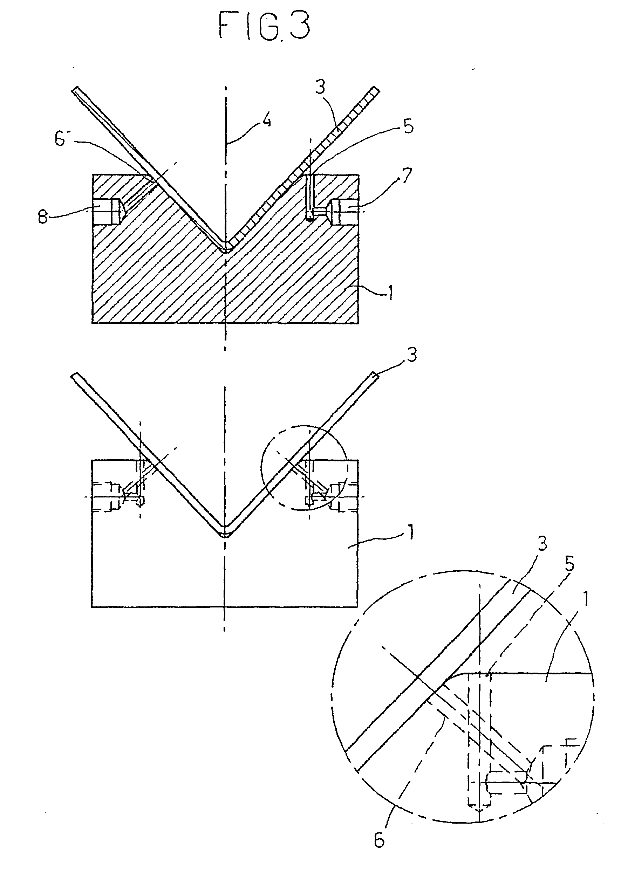

In the final step, FIG. 3, the orifice 5 will be completely free while the orifice 6 will be totally or partially closed.

In a preferred embodiment, the pressure detectors are not of the absolute type, but of the differential type, and detect the pressure difference that occurs in the duct going to the internal orifices with respect to the ducts going to the external orifices.

During the elastic return step, the plate bending angle measure must take into account both angles against which the plate rests on the two matrix die edges.

In order to do this, two separate differential pressure transducers can be used, one for each matrix die edge, and their signals can be processed in a combined way.

In the preferred embodiment being shown, the same ducts that mutually connect the external orifices and that mutually connect the internal orifices inside the matrix die, pneumatically realise the mean of measures of the two angles, based on symmetry, and therefore a single differential pressure sensor is used.

The angle measure can be obtained by measuring the detected pressure difference, through a calibration table that compensates for the unavoidable system lack of linearity, and takes into account the dependence on the supply air pressure.

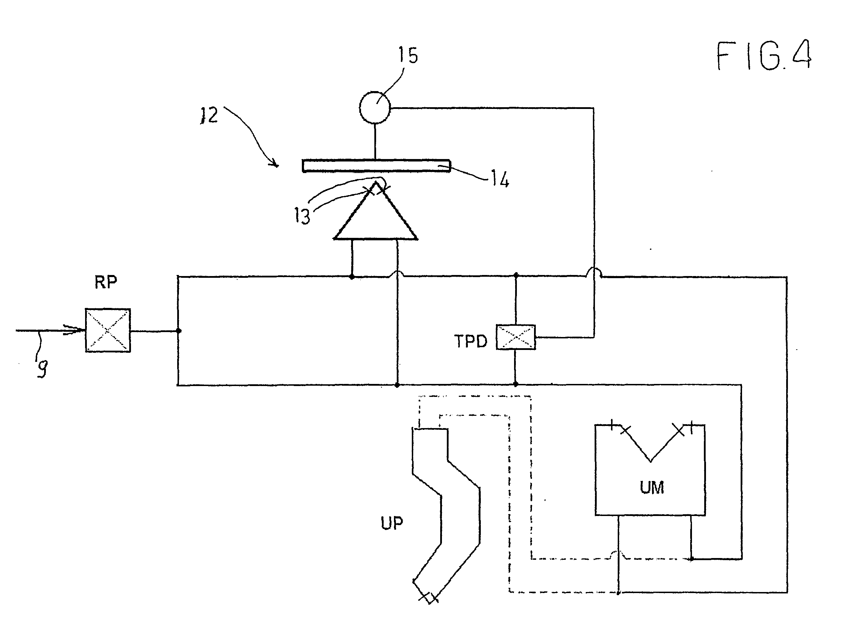

In a preferred system implementation, by modifying the pneumatic circuit as shown in FIG. 4, it is possible to avoid main measuring errors, due to the pressure reduced inaccuracy and the pressure sensor scale errors.

Branching from the two ducts connected to the differential pressure sensor TDP supplied by a pressure regulating unit RP, a compensating device 12 is added, composed of a pair of symmetrical orifices 13 with a shutter 14 connected to a servo-positioning device 15 adapted to progressively change the air passage section of the two orifices along opposite directions, in a way that is quite similar to what occurs on the matrix die edge when bending the plate.

If the servo-positioning device is controlled by the pressure difference detected by the differential pressure sensor TDP, it moves since it is taken to zero, since the air passage section difference in matrix die orifices is perfectly compensated by the section difference of compensating device orifices.

In this way, the plate angle is bi-univocally related to the position reached by the shutter, which can be very accurately detected through various systems known per se.

In the described example, the position is detected with an absolute encoder, not shown in the figures, and connected to the numeric press control.

After an initial calibration, for example performed with calibrated dihedral angles placed on the matrix die, the numeric control builds a table from which it obtains, at any time, the plate bending angle, starting from the shutter position, or vice versa.

It can be noted that the residual error due to differential sensor zero drift can be detected and compensated by the system upon every bending cycle, by simply shutting off the common compressed air supply and by taking into account the residual value provided by the sensor.

If, instead, the shutter is kept in a fixed position, corresponding to the minimum angle reached at the end of bending, the immediate measure of angle variations can be obtained, due to the plate thickness differences and the elastic return, by measuring pressure variations provided by the differential pressure sensor TDP around the zero value.

Such application is feasible both by using a matrix die as tool in a machine or alternatively a punch; in FIG. 4, a punch tool UP, which can replace the matrix die tool UM, is alternatively connected with dashed lines as device for detecting the bending angle.

The description made an explicit reference to controlling pressures in orifices, but, according to a possible variation, the parameter to be verified could be the compressed air outflow rate, such rate value changing depending on orifice clogging by the plate sheet.

A single pressure measuring system can be used with different pairs of orifices obtained in different matrix dies or punches, by every time selecting solenoid valves on respective pneumatic supply ducts.

In other words, the present invention want claim a process for detecting a bending angle of a plate sheet (3) that is going to be or has been bent by means of a bending press comprising a punch (2) means provided over a matrix die (1) and having matrix die slot (10), the method comprising the steps of:
- Generating at least two flows of two Matrix die (1) points that are totally or partially covered by the plate sheet (3)
- Measuring the pressure variation between the two flows of compressed air during said bending step

Processing the measured pressure values and comparing then with predetermined sample values through calibration.

Precisely said at least two flows comprise a first flow of compressed air that is directed perpendicular to the plate sheet (3) before its bending and is placed on the matrix die (1) next to the plane sheet-bearing surface to the matrix die slot (10), and a second flow directed perpendicular to the slot surface.

The pressure measure between the two air flows is performed with a pressure transducer of the differential type, connected to the two pneumatic supply ducts of a pair of orifices (5, 6) on the matrix die (1).

## Claims

1. A Process for detecting the bending angle of a plate sheet (3) that is going to be or has been bent along a bending line by means of a bending press comprising a punch (2) means provided over a matrix die (1) and having matrix die slot (10), comprising the following step:
- generating at least two flows of compressed air in two matrix die (1) points that are totally or partially covered by the plate sheet (3) during its bending step;
- measuring the pressure variation between the two flows of compressed air during said bending step;
- processing the measured pressure values and comparing then with predetermined sample values through calibration.

2. The process according to claim 1, **characterised in that** said at least two flows comprise first flow of compressed air that is directed perpendicular to the plate sheet (3) before its bending and is placed on the matrix die (1) next to the plane sheet-bearing surface to the matrix die slot (10), and a second flow directed perpendicular to the slot surface.

3. The process according to claim 1, **characterised in that** it provides for measuring the pressure of a pair of compressed air flows on both slot faces.

4. The process according to claim 1, **characterised in that** the pressure measure between the two air flows is performed with a pressure transducer of the differential type, connected to the two pneumatic supply ducts of a pair of orifices (5, 6) on the matrix die (1).

5. The process according to claim 4, **characterised in that** the pressure difference between the two air flows can be kept constant at a zero value, by means of a servo-controlled device comprising two orifices (5, 6) and a shutter, which is able to externally compensate for the covering differences of orifices on the matrix die generated by the plate abutment, and **characterised in that** the angle measure is referred to the position measure of the external compensating device.

6. The process according to claim 5, **characterised in that**, in order to more easily detect the small variations with respect to a provided bending angle, the servo-controlled device is kept in a position corresponding to the provided angle and the pressure difference is measured, provided by the transducer around the zero value.

7. The process according to claim 1, **characterised in that** the common compressed air supply line is periodically shut off to allow compensating for differential pressure sensor zero errors.

8. The process according to claim 1, **characterised in that** a single pressure measuring system can be used with different pairs of orifices obtained in different matrix dies, by selecting every time the pairs of orifices, by means of solenoid valves on respective pneumatic supply ducts.

9. The process according to claim 5, **characterised in that** the pair of orifices for measuring the bending angle is obtained on the punch (2).

## Patentansprüche

1. Verfahren zur Erfassung des Biegewinkels einer Platte aus Blech, die verbogen wird oder war entlang einer Biegelinie mittels einer mit einem Stempel versehenen Abkantpresse, der auf einer Matrize (1) einer Matrix angeordnet und einen Schlitz (10) der Matrize enthält, mit folgenden Schritten:
- Erzeugung von mindestens zwei Strömen Druckluft in zwei Punkte der Matrize (1) der Matrix, die ganz oder teilweise von der Platte aus Blech während seiner Biegeschritt abgedeckt sind;
- Messung des Druckunterschiedes zwischen den beiden Strömen Druckluft während dieser Biegeschritt;
- Verarbeitung der gemessenen Druckwerte und deren Vergleich mit vorbestimmten Musterwerten durch Kalibrierung.

2. Verfahren nach Anspruch 1, **dadurch gekennzeichnet, dass** die mindestens zwei gesagten Ströme einen ersten Strom Druckluft umfassen, der rechtwinklig zur Platte aus Blech (3) vor seiner Biegung gerichtet ist, und auf der Matrize (1) der Matrix neben der ebenen Blech-tragenden Oberfläche zum Schlitz (10) der Matrize der Matrix gelegen ist, und einen zweiten Strom der rechtwinklig zur Oberfläche des Schlitzes gerichtet ist.

3. Verfahren nach Anspruch 1, **dadurch gekennzeichnet, dass** es den Druck eines Paares Ströme Druckluft auf beiden Oberflächen des Schlitzes zu messen gestattet.

4. Verfahren nach Anspruch 1, **dadurch gekennzeichnet, dass** die Druckmessung zwischen beiden Luftströmen mit einem Druckaufnehmer der differentiellen Art durchgeführt wird, der mit den zwei pneumatischen Zuleitungen eines Paares Öffnungen (5, 6) auf der Matrize (1) der Matrix verbunden ist.

5. Verfahren nach Anspruch 4, **dadurch gekennzeichnet, dass** der Druckunterschied zwischen den zwei Luftströmen konstant auf einem Wert gleich Null gehalten werden kann, mittels eines zwei Öffnungen (5, 6) enthaltenden Servo-gesteuerten Gerät und einer Blende, die in der Lage ist, die Deckungsunterschiede von Öffnungen auf der Matrize der Matrix extern auszugleichen, die aus dem Anschlag der Platte verursacht werden, und **dadurch gekennzeichnet, dass** die Winkelmessung die Lagemessung der äußeren Ausgleichsvorrichtung betrifft.

6. Verfahren nach Anspruch 5, **dadurch gekennzeichnet, dass** um die kleinen Abweichungen bezüglich eines vorhandenen Biegewinkels erfassen zu können, wird die Servo-gesteurte Vorrichtung in einer solcher Lage gehalten, die dem vorgesehenen Winkel entspricht und das Druckunterschied gemessen wird, das aus dem Druckaufnehmer um das Wer Null geliefert wird.

7. Verfahren nach Anspruch 1, **dadurch gekennzeichnet, dass** die gemeinsame Druckluft Zuleitung periodisch geschlossen wird, um die differentielle Null-Fehler des Drucksensors auszugleichen.

8. Verfahren nach Anspruch 1, **dadurch gekennzeichnet, dass** ein einziges Druckmeßsystem verwendet werden kann, mit verschiedenen Paaren Öffnungen in den verschiedenen Matrizen der Matrix, jedesmal mit einer Wahl der Paare Öffnungen, mittels Solenoid-Ventile auf entsprechenden pneumatischen Zuleitungen.

9. Verfahren nach Anspruch 5, **dadurch gekennzeichnet, dass** das Paar Öffnungen für die Messung des Biegewinkels auf dem Stempel (2) erreicht wird.

## Revendications

1. Un procédé de détection de l'angle de pliage d'une feuille de plaque qui va être ou a été pliée le long d'une ligne de pliage au moyen d'une presse plieuse comprenant un poinçon prévu sur une matrice d'une filière et ayant une fente de la filière de la matrice, comprenant l'étape suivante :
- génération d'au moins deux flux d'air comprimé dans deux points de la filière (1) de la matrice, qui sont totalement ou partiellement couverts par la feuille de plaque (3) pendant son opération de pliage ;
- mesure de la variation de pression entre les deux flux d'air comprimé pendant la dite opération de pliage ;
- élaboration des valeurs de pression mesurés et leur comparaison avec des valeurs échantillons prédéterminés par une calibration.

2. Procédé selon la revendication 1, **caractérisé en ce que** les dits au moins deux flux comprennent un premier flux d'air comprimé qui est dirigé perpendiculairement à la feuille de plaque (3) avant son pliage et est placé sur la filière (1) de la matrice près de la surface plane portant la feuille vers la fente (10) de la filière de la matrice, et un deuxième flux dirigé perpendiculairement à la surface de la fente.

3. Procédé selon la revendication 1, **caractérisé en ce qu'**il permet de mesurer la pression d'un couple de flux d'air comprimé sur les deux surfaces de la fente.

4. Procédé selon la revendication 1, **caractérisé en ce que** la mesure de la pression entre les deux flux d'air est faite avec un transducteur de pression du type différentiel, connecté aux deux conduits pneumatiques d'alimentation d'un couple d'orifices (5, 6) sur la filière de la matrice (1).

5. Procédé selon la revendication 4, **caractérisé en ce que** la différence de pression entre les deux flux d'air peut être tenue constante à un volume zéro, par un dispositif de servo-contrôle comprenant deux orifices (5, 6) et un obturateur, qui est en gré de compenser à l'extérieur les différences de couverture des orifices sur la filière de la matrice générée par la butée de la plaque, et **caractérisé en ce que** la mesure angulaire est référée à la mesure de la position du dispositif de compensation extérieur.

6. Procédé selon la revendication 5, **caractérisé en ce que**, pour détecter plus aisément les petites variations à l'égard d'un angle de pliage prévu, le dispositif de servo-contrôle est tenu dans une position correspondante à l'angle prévu, avec la mesure de la différence de pression fournie par le transducteur autour de la valeur zéro.

7. Procédé selon la revendication 1, **caractérisé en ce que** la ligne commune d'alimentation d'air comprimé est périodiquement coupée pour permettre une compensation des erreurs de zéro du senseur de pression différentiel.

8. Procédé selon la revendication 1, **caractérisé en ce qu'**un seul système de mesure de la pression peut être utilisé avec des couples différents d'orifices obtenus dans des différentes filières de la matrice, par une sélection faite chaque fois des couples d'orifices, par des électrovannes sur des respectifs conduits d'alimentation pneumatiques.

9. Procédé selon la revendication 5, **caractérisé en ce que** le couple d'orifices pour mesurer l'angle de pliage est obtenu sur le poinçon (2).
